(19) Europäisches Patentamt
European Patent Office
Office européen des brevets

(11) **EP 2 296 307 B1**

(12) **FASCICULE DE BREVET EUROPEEN**

(45) Date de publication et mention
de la délivrance du brevet:
**07.11.2018  Bulletin 2018/45**

(51) Int Cl.:
***H04L 9/00*** *(2006.01)*     ***G09C 1/00*** *(2006.01)*

(21) Numéro de dépôt: **10175204.6**

(22) Date de dépôt: **03.09.2010**

(54) **Procédé de traitement cryptographique  de données sécurisé contre les attaques par canaux auxiliaires**

Gegen Seitenkanalangriffe gesichertes kryptografisches Datenverarbeitungsverfahren

Cryptographic data processing method secured against side-channel attacks

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **04.09.2009  FR 0956052**

(43) Date de publication de la demande:
**16.03.2011  Bulletin 2011/11**

(73) Titulaire: **IDEMIA France**
**92700 Colombes (FR)**

(72) Inventeurs:
• **Genelle, Laurie**
**95270, Saint Martin de Tertre (FR)**
• **Giraud, Christophe**
**33600, Pessac (FR)**
• **Prouff, Emmanuel**
**75018, Paris (FR)**

(74) Mandataire: **Santarelli**
**49, avenue des Champs-Elysées**
**75008 Paris (FR)**

(56) Documents cités:
**US-A1- 2008 260 145**

• **GOLIC J D ET AL: "Multiplicative Masking and Power Analysis of AES", LECTURE NOTES IN COMPUTER SCIENCE, SPRINGER, DE LNKD-DOI:10.1007/3-540-36400-5_16, vol. 2523, 1 janvier 2003 (2003-01-01), pages 198-212, XP002344149,**
• **LAURIE GENELLE, C. GIRAUD, E. PROUFF: "Securing AES Implementation against Fault Attacks", FAULT DIAGNOSIS AND TOLERANCE IN CRYPTOGRAPHY (FDTC), 2009 WORKSHOP ON, IEEE, PISCATAWAY, NJ, USA, 6 septembre 2009 (2009-09-06), pages 51-62, XP031627633, ISBN: 978-1-4244-4972-9**
• **ELISABETH OSWALD ET AL: "A Side-Channel Analysis Resistant Description of the AES S-Box", 8 juillet 2005 (2005-07-08), FAST SOFTWARE ENCRYPTION; [LECTURE NOTES IN COMPUTER SCIENCE;;LNCS], SPRINGER-VERLAG, BERLIN/HEIDELBERG, PAGE(S) 413 - 423, XP019011390, ISBN: 978-3-540-26541-2 * alinéas [0002] - [0004] ***

**EP 2 296 307 B1**

**Description**

La présente invention concerne un procédé de traitement cryptographique de données, en particulier pour les protéger contre les attaques par analyse par canal auxiliaire, appelées SCA (de l'anglais « side channel analysis »), notamment l'attaque appelée DPA (de l'anglais « differential power analysis »), ainsi qu'un dispositif associé. Elle s'applique, en particulier à la protection de contenus à maintenir secrets ou de circuits électroniques et de cartes à microcircuit.

Dans certains procédés de traitement de données, en particulier dans le cadre du traitement cryptographique de données, on utilise, au sein des algorithmes de traitement, des données qui doivent rester secrètes (telles que par exemple des clés cryptographiques) pour assurer le fonctionnement du système avec la sécurité requise. Ce type de procédé est dès lors la cible d'attaques de la part d'utilisateurs malveillants qui cherchent à déjouer la sécurité du système.

La DPA est une attaque qui permet d'obtenir des informations sur la clé secrète (contenue dans une carte à puce par exemple), en effectuant une analyse statistique des enregistrements de consommation électrique, mesurés sur un grand nombre de calculs avec la même clé. Cette attaque ne requiert aucune connaissance sur la consommation électrique individuelle de chaque instruction, ni sur la position dans le temps de chacune de ces instructions. Elle s'applique exactement de la même manière dès que l'attaquant connaît les sorties de l'algorithme et les courbes de consommation correspondantes.

On connaît une contre-mesure générique consistant à séparer toutes les variables intermédiaires (Suresh Chari, Charantjit S. Jutla, Josyula R. Rao et Pankaj Rohatgi, « Towards Sound Approaches to Counteract Power-Analysis Attacks » , Proceedings of Advances in Cryptology- CRYPTO'99, Springer-Verlag, 1999, pages. 398-412.). Or cette méthode générale augmente fortement les ressources nécessaires, quantité de mémoire et/ou temps de calcul. De plus, les étapes intermédiaires peuvent aussi être attaquées par DPA, si bien que la séparation des variables doit être effectuée sur toutes les étapes de l'algorithme. Cela rend d'autant plus important le problème de la consommation de ressources supplémentaire, en particulier pour des systèmes embarqués tels que les cartes à puce.

En 2000, Thomas Messerges a développé une contre-mesure générale, consistant à masquer toutes les entrées et sorties de chaque opération élémentaire exécutée par le microprocesseur. Pour se protéger contre les attaques appelées SCA (pour « side channel analysis » ou analyse par canal auxiliaire), notamment l'attaque DPA (« differential power analysis »), on connaît ainsi la mise en oeuvre d'un masquage additif dont l'équation est

$$X \text{ XOR } m$$

Où X est dans le champ de Galois $GF(2^8)$ plus généralement dans un champs de galois $GF(2^n)$.

XOR est la fonction « ou exclusif » qui associe à une couple (0,0) la valeur 0, au couple (0,1), la valeur 1, au couple (1,0), la valeur 1 et au couple (1,1), la valeur 0 et

m est un nombre aléatoire.

On note que, lorsqu'un bit de m vaut 1, la valeur du bit correspondant de X est inversée lors du masquage et que, lorsqu'un bit de m vaut 0, la valeur du bit correspondant de X est conservée lors du masquage. Ce qui implique que (X XOR m) XOR m = X. Le démasquage est ainsi effectué avec la même opération que le masquage.

Cette particularité permet que, si une fonction de transformation « transfo » est linéaire par rapport à la fonction XOR, soit

$$\text{transfo} (X \text{ XOR } m) = \text{transfo} (X) \text{ XOR transfo} (m)$$

le démasquage est réalisé par transfo (X XOR m) XOR transfo (m). Si on enchaîne plusieurs transformations linéaires successives, il suffit d'enlever le masque transformé (par la composition des transformations linéaires successives) à la fin de la dernière transformation linéaire.

Cependant, le codage AES (« Advanced Encryption Standard ») comporte une transformation non linéaire appelée « MIT » (pour « Multiplicative inverse Transformation ») composant l'opération SubByte.

Dans l'état de la technique, notamment illustré par le document US 2008/260145, pour permettre le calcul masqué de MIT, MIT a été adapté. Cependant, le MIT adapté est plus coûteux en ressources, notamment en espace mémoire et/ou en temps de traitement.

La publication "Multiplicative Masking and Power Analysis of AES" (J.D. Golic et C. Tymen) décrit une conversion de masquage additif en masquage multiplicatif lors de laquelle GF(256) est mappé dans une structure algébrique plus large, mappant ainsi le zéro de GF(256) sur un grand nombre de valeurs possibles. Une transformation non linéaire modifiée F' est alors utilisée.

La présente invention vise à remédier à ces inconvénients.

A cet effet, la présente invention vise des procédés de sécurisation d'un traitement cryptographique de données secrètes, tels que définis dans les revendications 1 et 2.

La sécurisation selon l'invention comporte notamment :

- au moins une étape de combinaison des données secrètes avec un premier masque additif par une addition « ou exclusif » pour fournir des données combinées avec le premier masque additif,
- une étape de conversion dudit premier masque additif en un masque multiplicatif pour obtenir des données masquées avec le masque multiplicatif à partir des données combinées avec le premier masque additif, ainsi que
- préalablement à l'étape de transformation non linéaire, une étape de remplacement d'une dite donnée secrète X par une valeur non nulle aléatoire, lorsque X=0.

La transformation non linéaire est appliquée sur les données masquées obtenues.

Grâce à ces dispositions, bien que la transformation non linéaire ne soit pas linéaire par rapport à l'opération ou exclusif, on peut effectuer une conversion inverse pour restaurer le masque additif et un démasquage classique.

Par ailleurs, le remplacement d'une donnée secrète par une valeur non nulle selon l'invention garantit une protection accrue du traitement cryptographique eu égard aux valeurs nulles, qui sont souvent l'élément absorbant des transformations non linéaires. En effet, dans ce cas, on réduit les risques vis-à-vis des attaques SCA en évitant que $\beta$ x X = 0 ($\beta$ étant le masque multiplicatif).

En outre, que cette valeur de remplacement soit aléatoire, offre de surcroît une résistance accrue aux attaques précitées.

La présente invention est ainsi particulièrement bien adaptée aux codages comportant des transformations non linéaires de type multiplicatives, et notamment faisant intervenir des puissances.

Selon les procédés de l'invention, l'étape de remplacement comprend une première sous-étape de combinaison des données combinées avec un second masque aléatoire additif lié à ladite valeur non nulle aléatoire, par un addition « ou exclusif ».

En particulier, l'étape de remplacement comprend une seconde sous-étape de combinaison des données obtenues à la première sous-étape de combinaison, avec le premier masque additif par une addition « ou exclusif » pour obtenir des données combinées avec le second masque additif. Grâce à cette disposition additionnelle, on peut supprimer toute trace du premier masque additif. Comme on le verra par la suite, cela permet d'indexer les outils de remplacement sur ce premier masque additif (correspondant à sa combinaison avec la valeur secrète nulle: m XOR X = m).

Selon une caractéristique optionnelle particulière, l'aléa est re-généré à toute nouvelle exécution du traitement cryptographique, par exemple de type codage AES. On peut ainsi utiliser une même table (comme introduite par la suite) pour plusieurs itérations de la conversion de masque additif en masque multiplicatif (vice et versa).

Selon une autre caractéristique optionnelle particulière, l'aléa est différent du premier masque additif mis en oeuvre dans l'étape de combinaison.

Toujours selon les procédés de l'invention, l'étape de remplacement met en oeuvre une table d'entrées remplies à l'aide d'un second masque additif aléatoire lié à ladite valeur non nulle aléatoire, et le remplacement comprend l'addition « ou exclusif » d'une entrée de la table avec lesdites données combinées avec un masque additif. La mise en oeuvre de l'opération d'addition "ou exclusif" pour protéger une valeur secrète nulle permet d'éviter l'utilisation d'instructions conditionnelles (*else if*) facilement détectables. La protection du traitement est donc nettement accrue.

On notera que de façon préférentielle la valeur de l'entrée est ajouté (XOR) aux données combinées avec le deuxième masque additif aléatoire, comme cela est largement détaillé par la suite. Toutefois, en variante, il pourra être envisagé d'effectuer cette addition sur les données combinées avec le premier masque additif aléatoire.

En particulier, ladite entrée de la table est une entrée indexée par les données combinées avec le premier masque additif. Encore une fois, cela permet de procéder à la protection des valeurs secrètes nulles sans directement manipuler ces valeurs secrètes. On notera en effet que pour une telle valeur secrète nulle, les données combinées avec le premier masque additif sont égales à ce premier masque additif. L'entrée indexée sur ce premier masque additif peut donc être bijectivement associée à la valeur secrète nulle, sans pour autant manipuler cette dernière.

Ainsi, les entrées de la table sont initialisées à la valeur du second masque additif aléatoire, et, préalablement à l'utilisation de ladite table pour l'étape de remplacement, on modifie l'entrée indexée par les données combinées avec le premier masque additif. De la sorte, la protection particulière de la valeur nulle peut être obtenue en appliquant un même traitement à la valeur secrète indépendamment de sa valeur (nulle ou non). En effet, c'est cette entrée particulière de la table qui permet d'adopter un traitement spécifique à la valeur nulle (dont la valeur une fois combinée avec le premier masque vaut ce premier masque, i.e. l'index de cette entrée particulière)

Toujours selon les procédés de l'invention, la modification de l'entrée indexée par les données combinées avec le premier masque additif est effectuée par l'addition « ou exclusif » de la valeur 1 à la valeur d'initialisation. Cette disposition permet de différencier le modifier la valeur secrète nulle à moindre coût, car l'addition « ou exclusif » de la valeur 1 est extrêmement simple. Elle permet en outre des mécanismes simples pour la suppression de cette modification (application de la même opération).

Selon une caractéristique optionnelle particulière, postérieurement à l'étape de remplacement, on restaure la table initiale par application d'une modification inverse sur ladite entrée indexée modifiée. De la sorte, on peut réutiliser, à moindre coût, la table remplie avec la valeur du second masque additif. L'addition « ou exclusif » de la valeur 1 est notamment son propre inverse.

Toujours selon les procédés de l'invention, l'étape de conversion comprend une sous-étape de combinaison des données combinées, avec un masque multiplicatif par une multiplication, puis une sous-étape de combinaison des données ainsi obtenues avec ladite entrée indexée, elle-même combinée, par une multiplication, avec le masque multiplicatif. Cette disposition permet de supprimer, de façon sécurisée, le second masque additif afin d'obtenir un unique masque multiplicatif des données secrètes. En effet, dans ce cas, la valeur de l'entrée indexée peut être liée au second masque additif, comme évoqué précédemment.

Dans un mode de réalisation, on mémorise le fait d'avoir effectuée l'addition « ou exclusif » d'une entrée de la table, et le procédé comprend, postérieurement à ladite transformation non linéaire, une étape d'addition « ou exclusif » de la même entrée de la table avec les données obtenues par la transformation non linéaire. Cette disposition permet de retirer la protection de la valeur secrète nulle après avoir appliquer la transformation non linéaire périlleuse.

Comme indiqué précédemment, les procédés selon l'invention permettent de sécuriser un traitement cryptographique pour appliquer la transformation non linéaire de type multiplicative prévue dans ce traitement cryptographique. En d'autres termes, la transformation non linéaire du traitement cryptographique demeure inchangée (par rapport au traitement cryptographique avant sécurisation selon l'invention) lorsqu'elle est appliquée pour l'étape de transformation des données multipliées.

Selon des caractéristiques particulières, au moins une dite étape de transformation non linéaire de type multiplicative est la transformation MIT du codage AES.

Selon des caractéristiques particulières, lesdites étapes de transformations sont celles du codage AES.

La présente invention s'applique ainsi, en particulier, au codage AES (Advanced Encryption Standard) et permet d'en exploiter les avantages, notamment en termes de consommation de ressources, sans avoir à le modifier.

Selon des caractéristiques particulières, on effectue la conversion du masque additif en masque multiplicatif entre deux rondes.

Selon des caractéristiques particulières, le procédé objet de la présente invention comporte, en outre, une étape de conversion inverse du masque multiplicatif en masque additif après ladite étape de transformation non linéaire de nature multiplicative.

On permet ainsi à des transformations linéaires par rapport à l'addition de succéder à l'étape de transformation non linéaire de nature multiplicative.

Selon des caractéristiques particulières, l'étape de conversion inverse du masque multiplicatif en masque additif, pour partant des données secrètes X masquées par le masque multiplicatif $\beta$, soit $\beta$ x X ($\beta \neq 0$), obtenir les données secrètes X masquées par le masque additif m, soit X XOR m, on effectue la succession d'opérations suivante :

$$((\beta \times X) \text{ XOR } (m \times \beta)) \times \beta^{-1} = X \text{ XOR } m.$$

Cependant, cette succession d'opérations à l'inconvénient offrir une résistance insuffisante aux attaques SCA quant X=0.

Selon des caractéristiques particulières de la revendication 8, on évite que les données secrètes soient démasquées au cours de la conversion. Cette succession d'opérations, a l'avantage de sécuriser l'étape de conversion contre les SCA.

Corrélativement, l'invention concerne également des dispositifs de sécurisation d'un traitement cryptographique de données secrètes, tels que définis dans les revendications 9 et 10.

Un tel dispositif peut être une entité électronique de poche, telle qu'une carte à microcircuit, par exemple conforme à la norme ISO7816 ; en variante, il peut s'agir d'un autre type d'entité électronique, comme par exemple un ordinateur (tel un ordinateur personnel) ou une clé USB.

Les avantages, buts et caractéristiques particulières de ce dispositif étant similaires à ceux du procédé objet de la présente invention, ils ne sont pas rappelés ici.

Les procédés et dispositifs évoqués ci-dessus sont typiquement mis en oeuvre au moyen de l'exécution des instructions d'un programme d'ordinateur par un microprocesseur. L'exécution des instructions permet ainsi le traitement par le microprocesseur des données mémorisées dans le dispositif, par exemple au sein d'une mémoire vive de celui-ci. D'autres modes de réalisation pourront toutefois être envisagés, comme par exemple l'utilisation d'un circuit à application spécifique apte à mettre en oeuvre les étapes des procédés envisagés ci-dessus.

Dans ces différents contextes, les données d'entrée peuvent être des données reçues par le dispositif de traitement d'un dispositif extérieur, par exemple au moyen d'une interface de communication du dispositif de traitement. Il peut toutefois s'agir également de données mémorisées dans le dispositif (par exemple en mémoire non-volatile) ou de données intermédiaires obtenues à partir des données de résultat d'une autre transformation.

De même, au moins une des données de résultat peut être une donnée à émettre en sortie du dispositif, par exemple à destination du dispositif extérieur au moyen de l'interface de communication. Les données de résultat peuvent toutefois n'être que des données intermédiaires, éventuellement utilisées par le dispositif dans des processus (par exemple de calcul) ultérieurs.

Chacun des algorithmes cryptographiques mentionnés ci-dessus permet par exemple de réaliser, au moins en partie, une opération de chiffrement, de déchiffrement, de signature, d'échange de clé cryptographique ou de génération de clé cryptographique.

Dans ce type d'application, les données d'entrée sont par exemple un message (ou une partie d'un message) reçu du dispositif extérieur et qui est crypté (ou décrypté) au sein dispositif de traitement au moyen du ou des algorithmes cryptographiques précités, puis ré-émis en sortie du dispositif de traitement à travers l'interface de communication.

D'autres avantages, buts et caractéristiques de la présente invention ressortiront de la description qui va suivre faite, dans un but explicatif et nullement limitatif, en regard des dessins annexés, dans lesquels :

- la figure 1 représente schématiquement les éléments principaux d'une forme de réalisation possible pour une carte à microcircuit ;
- la figure 2 représente l'allure physique générale de la carte à microcircuit de la figure 1 ;
- la figure 3 illustre schématiquement l'algorithme AES pour la mise en oeuvre du procédé selon l'invention,
- la figure 4 représente, sous forme d'un logigramme, des étapes pour la mise en oeuvre d'un premier mode de réalisation particulier du procédé objet de la présente invention et
- la figure 5 représente, sous forme d'un logigramme, des étapes pour la mise en oeuvre d'un deuxième mode de réalisation particulier du procédé objet de la présente invention.

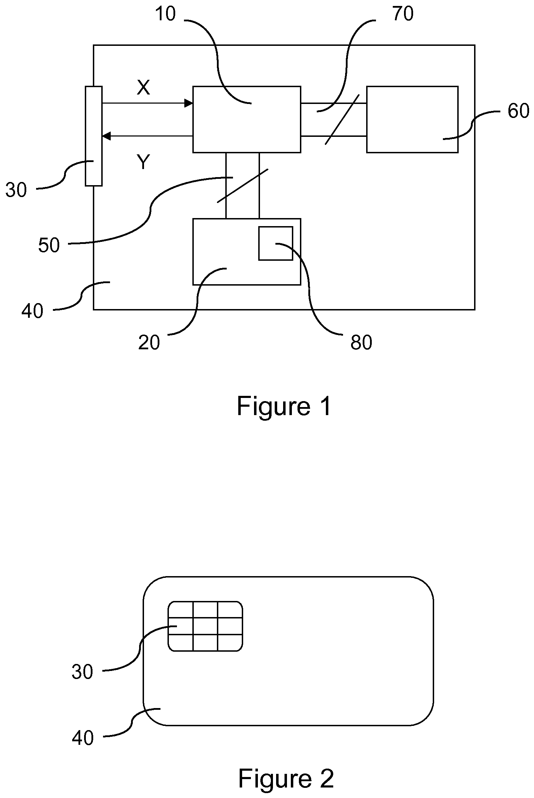

La figure 1 représente schématiquement un dispositif de traitement de données 40 dans lequel la présente invention est mise en oeuvre. Ce dispositif 40 comprend un microprocesseur 10, auquel est associée d'une part une mémoire vive 60, par exemple au moyen d'un bus 70, et d'autre part une mémoire non volatile 20 (par exemple du type EEPROM), par exemple à travers un bus 50.

Le dispositif de traitement de données 40, et précisément le microprocesseur 10 qu'il incorpore, peuvent échanger des données avec des dispositifs extérieurs au moyen d'une interface de communication 30.

On a schématiquement représenté sur la figure 1 la transmission d'une donnée d'entrée X reçue d'un dispositif extérieur (non représenté) et transmise de l'interface de communication 30 au microprocesseur 10. De manière similaire, on a représenté la transmission d'une donnée de sortie S du microprocesseur 10 vers l'interface de communication 30 à destination d'un dispositif extérieur. Cette donnée de sortie Y est issue d'un traitement de données par le microprocesseur 10, généralement sur la donnée d'entrée X à l'aide d'une donnée secrète 80 interne au système, par exemple une clé privée.

Bien que, pour l'illustration, les données d'entrée et les données de sortie figurent sur deux flèches différentes, les moyens physiques qui permettent la communication entre le microprocesseur 10 et l'interface 30 pourront être réalisés par des moyens uniques, par exemple un port de communication série ou un bus.

Le microprocesseur 10 est apte à exécuter un logiciel (ou programme d'ordinateur) qui permet au dispositif de traitement de données 40 d'exécuter un procédé conforme à l'invention dont des exemples sont donnés dans la suite. Le logiciel est composé d'une série d'instructions de commande du microprocesseur 10 qui sont par exemple stockées dans la mémoire 20.

En variante, l'ensemble microprocesseur 10 - mémoire non-volatile 20 - mémoire vive 60 peut être remplacé par un circuit à application spécifique qui comprend alors des moyens de mise en oeuvre des différentes étapes du procédé de traitement de données.

La figure 2 représente une carte à microcircuit qui constitue un exemple de dispositif de traitement de données conforme à l'invention tel que représenté à la figure 1. L'interface de communication 30 est dans ce cas réalisée au moyen des contacts de la carte à microcircuit. La carte à microcircuit incorpore un microprocesseur 10, une mémoire vive 60 et une mémoire non volatile 20 comme cela est représenté sur la figure 1.

Cette carte à microcircuit est par exemple conforme à la norme ISO 7816 et munie d'un microcontrôleur sécurisé qui regroupe le microprocesseur (ou CPU) 20 et la mémoire vive 60.

En variante, le dispositif de traitement de données peut être une clef USB, un document ou un support d'informations papier comportant dans l'une de ses feuilles un microcircuit associé à des moyens de communication sans contact. Il s'agit de manière préférée d'une entité électronique portable ou de poche.

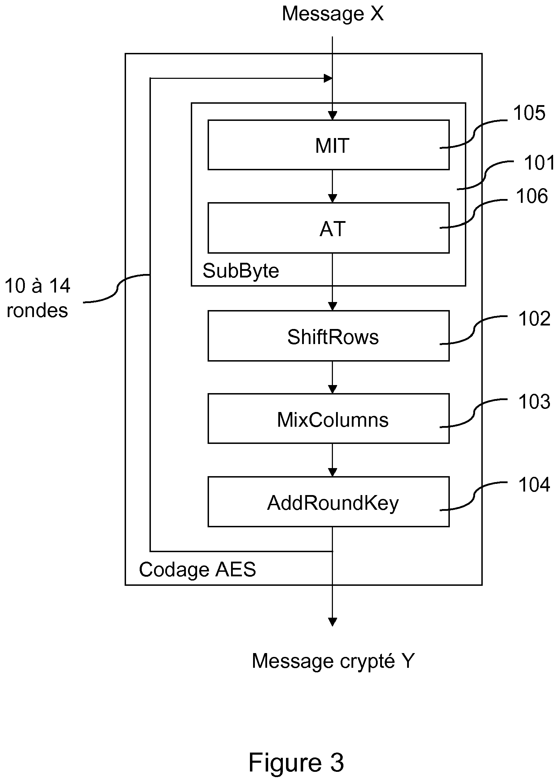

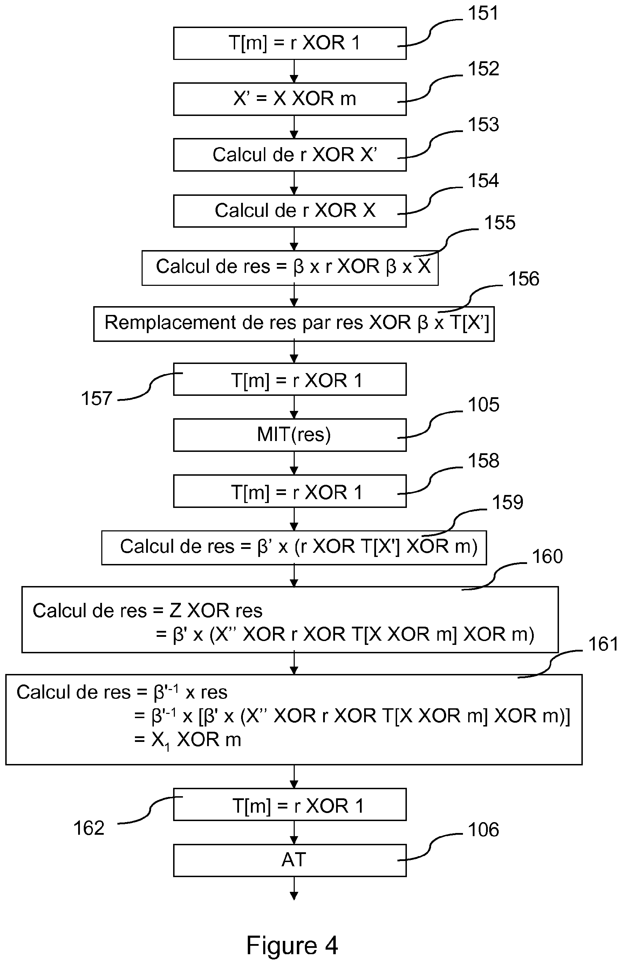

En référence aux figures 3 et 4, on décrit maintenant un exemple de procédé selon l'invention appliqué à un traitement cryptographique symétrique de type AES, au cours duquel le microprocesseur 10 chiffre un message X en un message crypté Y.

La figure 3 illustre schématiquement l'algorithme AES qui prend en entrée un bloc de 16 octets du message à traiter: $X = (x_i)_{i=0\ldots15} \in GF(2^8)^{16}$.

Le chiffrement AES exécute une séquence de rondes, généralement 10, 12 ou 14, comprenant les transformations individuelles représentées sur la figure 3. AES est un algorithme de chiffrement symétrique, qui prend, en entrée, un message X, sous forme d'un bloc de 128 bits (16 octets), et une clé de 128, 192 ou 256 bits.

Les quatre étapes principales d'une ronde sont l'opération non linéaire (selon l'addition bit à bit) SubByte 101 de substitution de chaque octet $x_i$ à l'aide d'une boîte S-Box, puis les opérations linéaires ShiftRows 102 de transposition cyclique, MixColumns 103 de produit matriciel et AddRoundKey 104 de combinaison de chaque octet avec une clé de ronde.

Ces opérations sont répétées plusieurs fois et définissent une « ronde ». Pour une clé de 128, 192 ou 256 bits, AES nécessite respectivement 10, 12 ou 14 rondes.

Les opérations SubByte et ShiftRows peuvent toutefois être inversées, par rapport à l'ordre de la figure 3, sans impacter l'algorithme.

Ces différentes étapes sont définies dans la norme AES et ne seront par conséquent pas décrites en détail au-delà de ce qui intéresse la présente invention. Chaque étape est vue comme une transformation individuelle de l'algorithme, avec en outre l'étape SubByte qui peut être décomposée en deux autres transformations individuelles: une transformation, non linéaire, inverse multiplicative 105 notée MIT (Multiplicative Inverse Transformation) et une transformation, linéaire, affine 106 notée AT (Affine Transformation). Ainsi, S-Box$(x_i)$ = AT o MIT$(x_i)$.

Comme illustré en figure 4, selon l'invention, on adjoint, en entrée de la transformation non linéaire de nature multiplicative MIT, une conversion du masque additif m en un masque multiplicatif β qui est alors compatible avec MIT.

$$\text{Ainsi MIT } (\beta \times X) = \text{MIT } (\beta) \times \text{MIT } (X).$$

On note que le démasquage peut être réalisé par l'opération MIT (β) x MIT (β x X).

La conversion d'un masque additif en masque multiplicatif peut poser des problèmes. En effet, une succession d'opérations pour, partant des données secrètes X masquées par le masque additif m, soit X XOR m, obtenir les données secrètes X masquées par le masque multiplicatif β, soit β x X, est la suivante : (X XOR m) x β XOR m x β = β x X. Cette succession d'opérations pose un problème de sécurité car, si X est nul, β x X est nul et un attaquant peut obtenir une information sur X. C'est pour cette raison que l'on n'utilise pas, habituellement, de masquage multiplicatif.

Pour résoudre ce problème, les inventeurs ont choisi de remplacer X par une valeur, par exemple constante, lorsque X = 0.

Cependant, si on effectue ce remplacement par une opération conditionnelle (si X = 0, X = constante), cette opération conditionnelle serait détectable par une attaque SCA.

Les inventeurs proposent un algorithme de conversion sécurisée contre ce type d'attaque, illustré en figure 4, dans lequel :

- au cours d'une étape 151, T étant une table remplie avec 256 octets égaux à un aléa r, m étant le masque additif sur un octet, on remplace T[m] par r XOR 1, noté r'. Après cette étape 151, la table T contient partout r sauf à l'indice m, où elle contient r' = r XOR 1 ;
- au cours d'une étape 152, on détermine X' = X XOR m. Il s'agit d'un masquage additif initial classique ;
- au cours d'une étape 153, on effectue r XOR X', c'est-à-dire r XOR X XOR m ;
- au cours d'une étape 154, on effectue r XOR X' XOR m = r XOR X (on note que les étapes 153 et 154 sont dans cet ordre pour éviter de démasquer X. Elles permettent en outre de substituer le masquage de X avec m, par un masquage avec uniquement r) ;
- au cours d'une étape 155, on obtient le résultat res = β x r XOR β x X (en multipliant r XOR X' XOR m par β). On applique ici le masque multiplicatif β; et
- au cours d'une étape 156, on remplace le résultat res par res XOR β x T[X']. Cette opération permet de retirer définitivement la présence de tout masque additif.

Ainsi en effet, si X = 0 alors T[X'] = T [m] = r' = r XOR 1 donc β x T[X'] = β x r XOR β. Donc res XOR β x T[X'] = β x r XOR β x X XOR β x r XOR β = β x X XOR β. Comme X est nul, res est remplacé par β au cours de l'étape 156.

Au contraire, si X est différent de « 0 », alors T[X'] = r donc β x T[X'] = β x r. Donc res XOR β x T[X'] = β x r XOR β x X XOR β x r = β x X etle résultat res prend la valeur β x X au cours de l'étape 156, c'est-à-dire que le masque multiplicatif β a été appliqué à l'entrée X.

La restauration de la table T se fait par une autre itération de l'étape 151, au cours d'une étape 157.

A noter que l'utilisation de l'aléa r pour remplir la table, indépendamment du masque m choisi à chaque transformation de l'algorithme AES, permet d'utiliser une même table pour plusieurs transformations/rondes dans l'algorithme AES. Par exemple, une re-génération de l'aléa r (et donc la table aussi) à chaque nouvelle exécution de l'algorithme AES apparaît suffisante. Toutefois, cette génération peut être plus fréquente. Notamment, elle peut avoir lieu entre la conversion masque additif vers masque multiplicatif (étapes 151-156) et la conversion inverse masque multiplicatif vers masque additif (étapes 158-162 comme décrites ci-après).

On applique alors la transformation MIT 105, telle que classiquement prévue dans l'algorithme AES, aux données masquées multipliées obtenues à l'étape 156. Les étapes 151 à 156 ont ainsi permis de sécuriser les données secrètes X mêmes lorsqu'elles prennent une valeur nulle, sans nécessiter une quelconque adaptation de la transformation MIT.

Soit Z le résultat obtenu par application de la transformation MIT 105 aux valeurs $\beta$ x X (ou $\beta$ x (X XOR 1) dans le cas X=0). On obtient: si

$$X=0, Z = MIT(\beta) = MIT(\beta \text{ x } (X \text{ XOR } 1)) = MIT(\beta) \text{ x } MIT(X \text{ XOR } 1);$$

si

$$X{\neq}0, Z = MIT(\beta \text{ x } X) = MIT(\beta) \text{ x } MIT(X).$$

Pour la suite, on note $\beta' = MIT(\beta)$, et X" la valeur MIT(X) ou MIT(X XOR 1) si X=0, et $X_1$ la valeur MIT(X).

La transformation MIT 105, par exemple une fonction puissance, est distributive par rapport à la fonction addition ou exclusif XOR. Ainsi MIT(X XOR 1) = MIT(X) XOR MIT(1) = MIT(X) XOR 1 = $X_1$ XOR 1.

De ce fait, on observe que Z = $\beta'$ x X" vaut $\beta'$ x $X_1$ si X$\neq$0 et vaut $\beta'$ x ($X_1$ XOR 1) si X=0.

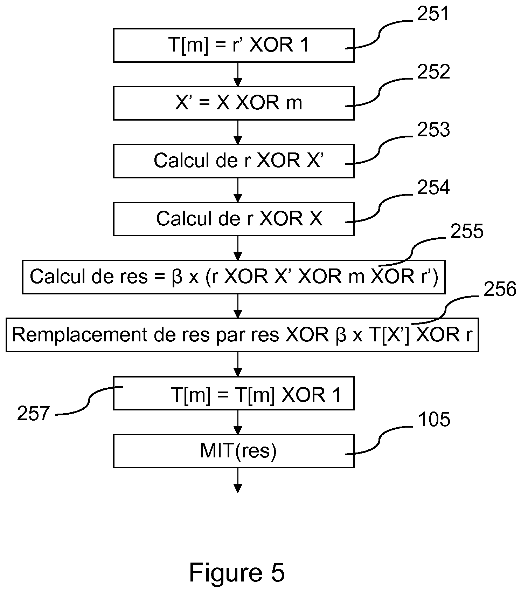

Dans les modes de réalisation illustrés en figures 4 et 5, on convertit un masque additif en masque multiplicatif entre deux rondes, c'est-à-dire entre une étape AddRoundKey 104 d'une ronde et l'étape MIT 105 de la ronde suivante. L'étape MIT s'applique ainsi à la valeur res calculée précédemment pour obtenir Z. Puis, on convertit le masque multiplicatif en masque additif entre l'étape MIT 105 et l'étape AT 106.

La conversion du masque multiplicatif $\beta'$ en masque additif m, avec une opération multiplicative notée « x » distributive par rapport à l'addition (ce qui est le cas pour les corps finis de caractéristique 2, entre autres), est effectuée par la succession d'opérations suivantes :

$$(\beta' \text{ x } X_1 \text{ XOR } m \text{ x } \beta') \text{ x } \beta'^{-1} = X_1 \text{ XOR } m$$

En d'autres termes, connaissant $\beta'$ x $X_1$, les données secrètes $X_1$ étant masquées par le masque multiplicatif $\beta'$, on obtient, par cette succession d'opérations, les données $X_1$ masquées par le masque additif m.

Préférentiellement, on effectue, d'abord, le calcul de m x $\beta'$, au cours d'une étape 111, puis l'opération XOR entre $\beta'$ x $X_1$ et le résultat de l'étape 111, au cours d'une étape 112 et la multiplication par $\beta'^{-1}$ au cours d'une étape 113. En effet, cet ordre augmente la robustesse de l'algorithme aux attaques SCA.

Cette conversion est simple car ni $\beta'$, ni $X_1$ ne peuvent être égaux à « 0 ». Cependant, dans le cas où, préalablement, X a été remplacé par une valeur non nulle, lors de la conversion du masque additif en masque multiplicatif antérieure, on dispose noon plus de $X_1$ mais de X" tenant compte de ce remplacement. On effectue alors une conversion différente du masque multiplicatif en masque additif. Cela ne peut se faire par un test car on veut se protéger contre les attaques SCA.

Ainsi, selon un mode de réalisation préférentiel, on effectue les étapes suivantes :

- au cours d'une étape 158, T étant une table remplie avec 256 octets égaux à un aléa r, m étant le masque additif sur un octet, on remplace T[m] par r' = r XOR 1. Après cette étape 158, la table T contient partout r sauf à l'indice m, où elle contient r XOR 1.
  A noter que les étapes 157 et 158 peuvent être omises dans le cas notamment où l'on re-génère l'aléa r uniquement à chaque nouvelle exécution de l'algorithme AES,

- au cours d'une étape 159, on calcule res = $\beta'$ x (r XOR T[X'] XOR m) en partant de T[X'] et successivement additionnant XOR m, puis XOR r, et enfin en multipliant par $\beta'$=MIT($\beta$).
  On note que si X = 0, res = $\beta'$ x (r XOR r XOR 1 XOR m) = $\beta'$ x (1 XOR m) et que, si X est différent de 0, res = $\beta'$ x

(r XOR r XOR m) = $\beta'$ x m.

Le masque m peut être choisi différent de celui de l'étape 151 ;

- au cours d'une étape 160, on calcule res = Z XOR res = ($\beta'$ x X") XOR [$\beta'$ x (r XOR T[X'] XOR m)] = $\beta'$ x (X" XOR r XOR T[X XOR m] XOR m),
On note que si X = 0, res = $\beta'$ x (X" XOR 1 XOR m) = $\beta'$ x ($X_1$ XOR 1 XOR 1 XOR m) = $\beta'$ x ($X_1$ XOR m),et que, si X est différent de 0, res = $\beta'$ x (X" XOR m) = $\beta'$ x ($X_1$ XOR m) (ce qui correspond à l'application du masque additif m, quelque soit la valeur de $X_1$=MIT(X)). En outre, cette étape permet, du fait de l'utilisation de T[X'] (étape 159), de supprimer en même temps la sécurisation de la valeur nulle X=0 (ici par application une seconde fois de XOR 1)
- au cours d'une étape 161 de démasquage multiplicatif, on remplace res par $\beta'^{-1}$ x res, de sorte à récupérer la valeur transformée masquée additivement: $\beta'^{-1}$ x $\beta'$ x ($X_1$ XOR m) = $X_1$ XOR m, et
- au cours d'une étape 162, on remplace T[m] par T[m] XOR 1 pour restaurer la table T.

On note que, en variante, comme illustré en figure 5, pour la conversion du masque additif en masque multiplicatif, au lieu d'utiliser un table T de 256 octets, on utilise une table T de 256 bits r" prenant aléatoirement la valeur « 0 » ou « 1 ».
Les étapes 151 à 157 de la figure 4, sont remplacées par les étapes suivantes :

- au cours d'une étape 251, T étant une table remplie avec 256 bits égaux à un aléa binaire r", m étant le masque additif sur un octet, on remplace T[m] par r" XOR 1. Après cette étape 251, la table T contient partout r" sauf à l'indice m, où elle contient r" XOR 1 ;
- au cours d'une étape 252, on détermine X' = X XOR m ;
- au cours d'une étape 253, on effectue r XOR X', c'est-à-dire r XOR X XOR m ;
- au cours d'une étape 254, on effectue r XOR X' XOR m = r XOR X ;
- au cours d'une étape 255, on obtient le résultat res = $\beta$ x (r XOR X' XOR m XOR r") ;
- au cours d'une étape 256, on remplace le résultat res par res XOR $\beta$ x (T[X'] XOR r) et
- au cours d'une étape 257, on remplace T[m] par T[m] XOR 1.

Cette variante a l'avantage d'économiser de l'espace mémoire volatile, par exemple de la mémoire vive RAM, très limitée dans une carte à puce.
La présente invention ne se limite pas aux transformations de l'algorithme cryptographique symétrique AES, mais peut être appliquée à tout type d'algorithme, incluant DES et IDEA NXT (également connu sous l'appellation FOX).
De façon similaire à AES, FOX réalise plusieurs rondes d'opérations, incluant une opération non linéaire de nature multiplicative muX.

## Revendications

1. Procédé de sécurisation d'un traitement cryptographique de données secrètes (80) mettant en oeuvre au moins une transformation non linéaire (105) de type multiplicative des données secrètes, comportant :

   - au moins une étape de combinaison (152) des dites données secrètes avec un premier masque additif (m) par une addition « ou exclusif » pour fournir des données combinées (X') avec le premier masque additif,
   - une étape de conversion (153-156) dudit premier masque additif (m) en un masque multiplicatif ($\beta$) pour obtenir des données masquées avec le masque multiplicatif à partir des données combinées (X') avec le premier masque additif,
   - au moins une étape de transformation des données masquées avec le masque multiplicatif, avec ladite transformation non linéaire (105) de type multiplicative du traitement cryptographique,

   **caractérisé en ce que** l'étape de conversion préalable à l'étape de transformation non linéaire (105) comprend l'application sur les données combinées (X') d'opérations impliquant au moins un aléa r pour remplacer une dite donnée secrète X par une valeur non nulle, lorsque X=0, et conserver ladite donnée secrète X inchangée lorsque X≠0, et

   les opérations de remplacement et l'étape de conversion de masque additif en masque multiplicatif comportent, en partant des données secrètes X masquées par le masque additif m, soit X XOR m, pour obtenir des données secrètes X" masquées par le masque multiplicatif $\beta$, soit $\beta$ x X", T étant une table remplie des données égales à l'aléa r de même nombre de bits que X, m étant le masque additif, la succession d'étapes a) à d) suivante :

- a) on remplace T[m] par r XOR 1, pour que la table T contienne partout r sauf à l'indice m, où elle contient r XOR 1 ;
- b) on détermine X' = X XOR m, on effectue r XOR X', c'est-à-dire r XOR X XOR m et on effectue r XOR X' XOR m = r XOR X ;
- c) on calcule ($\beta$ x r) XOR ($\beta$ x X) en multipliant r XOR X' XOR m par $\beta$ et
- d) on obtient $\beta$ x X" en calculant (($\beta$ x r) XOR ($\beta$ x X)) XOR ($\beta$ x T[X']).

2. Procédé de sécurisation d'un traitement cryptographique de données secrètes (80) mettant en oeuvre au moins une transformation non linéaire (105) de type multiplicative des données secrètes, comportant :

- au moins une étape de combinaison (152) des dites données secrètes avec un premier masque additif (m) par une addition « ou exclusif » pour fournir des données combinées (X') avec le premier masque additif,
- une étape de conversion (153-156) dudit premier masque additif (m) en un masque multiplicatif ($\beta$) pour obtenir des données masquées avec le masque multiplicatif à partir des données combinées (X') avec le premier masque additif,
- au moins une étape de transformation des données masquées avec le masque multiplicatif, avec ladite transformation non linéaire (105) de type multiplicative du traitement cryptographique,

**caractérisé en ce que** l'étape de conversion préalable à l'étape de transformation non linéaire (105) comprend l'application sur les données combinées (X') d'opérations impliquant au moins un aléa r pour remplacer une dite donnée secrète X par une valeur non nulle, lorsque X=0, et conserver ladite donnée secrète X inchangée lorsque X$\neq$0, et
les opérations de remplacement et l'étape de conversion de masque additif en masque multiplicatif comportent, en partant des données secrètes X masquées par le masque additif m, soit X XOR m, pour obtenir des données secrètes X" masquées par le masque multiplicatif $\beta$, soit $\beta$ x X", T étant une table remplie des données égales à un aléa r" binaire prenant aléatoirement la valeur « 0 » ou « 1 », la succession d'étapes e) à h) suivante :

- e) on remplace T[m] par r" XOR 1 pour que la table T contienne partout r" sauf à l'indice m, où elle contient r" XOR 1 ;
- f) on détermine X' = X XOR m, on effectue r XOR X', c'est-à-dire r XOR X XOR m et on effectue r XOR X' XOR m = r XOR X ;
- g) on calcule $\beta$ x (r XOR X' XOR m XOR r") ;
- h) on obtient $\beta$ x X" en calculant [$\beta$ x (r XOR X' XOR m XOR r")] XOR $\beta$ x (T[X'] XOR r).

3. Procédé selon la revendication 1 ou 2, dans lequel l'aléa r est regénéré à toute nouvelle exécution du traitement cryptographique.

4. Procédé selon l'une des revendications précédentes, dans lequel, postérieurement aux opérations de remplacement, on restaure (157) la table initiale par application d'une modification inverse sur ladite entrée indexée modifiée (T[m]).

5. Procédé selon l'une des revendications précédentes, dans lequel on mémorise le fait d'avoir effectuée l'addition « ou exclusif » (156) d'une entrée de la table avec les données combinées avec un masque additif, et le procédé comprend, postérieurement à ladite transformation non linéaire (105), une étape d'addition « ou exclusif » (160) de la même entrée de la table avec les données obtenues par la transformation non linéaire.

6. Procédé selon l'une des revendications précédentes, dans lequel au moins une dite étape de transformation non linéaire de type multiplicative est la transformation MIT du codage AES, et
on effectue la conversion du masque additif en masque multiplicatif entre deux rondes.

7. Procédé selon la revendication 6, qui comporte, en outre, une étape de conversion inverse du masque multiplicatif en masque additif après ladite étape de transformation non linéaire de nature multiplicative.

8. Procédé selon la revendication précédente, au cours de l'étape de conversion inverse, en partant des données secrètes X" masquées par le masque multiplicatif $\beta$'= MIT($\beta$) soit $\beta$' x X", pour obtenir des données secrètes $X_1$ masquées par le masque additif m, soit $X_1$ XOR m, on effectue les étapes i) à k) suivantes, T étant une table remplie avec données égales à un aléa r, m étant le masque additif, on remplace T[m] par r XOR 1 pour que la table T contienne partout r sauf à l'indice m, où elle contient r XOR 1, on a $\beta$' X" avec $\beta$' X" = $\beta$' $X_1$, si X est différent de « 0 » et $\beta$' X" = $\beta$' si X = 0,

- i) on calcule β'[r XOR T(X XOR m)XOR m] et
- j) on calcule β' x X" XOR β' [r XOR T(X XOR m) XOR m],
- k) on obtient $X_1$ XOR m en calculant $β'^{-1}$ x [β' x X" XOR r x β' XOR β' (T[X XOR m] XOR m)].

9. Dispositif de sécurisation d'un traitement cryptographique de données secrètes (80) mettant en oeuvre au moins une transformation non linéaire (105) de type multiplicative des données secrètes, comportant :

- au moins un moyen de combinaison des dites données secrètes avec un premier masque additif (m) par une addition « ou exclusif » pour fournir des données combinées (X') avec le premier masque additif,
- un moyen de conversion dudit premier masque additif (m) en un masque multiplicatif (β) pour obtenir des données masquées avec le masque multiplicatif à partir des données combinées (X') avec le premier masque additif,
- au moins un moyen de transformation des données masquées, avec ladite transformation non linéaire (105) de type multiplicative du traitement cryptographique, et

**caractérisé en ce qu'**il comporte en outre un moyen de remplacement mettant en oeuvre, sur les données combinées (X'), des opérations impliquant au moins un aléa r pour remplacer, préalablement à l'étape de transformation non linéaire (105), une dite donnée secrète X par une valeur non nulle, lorsque X=0 et conserver ladite donnée secrète X inchangée lorsque X≠0, et

dans lequel les moyens de remplacement et de conversion sont configurés pour réaliser, en partant des données secrètes X masquées par le masque additif m, soit X XOR m, pour obtenir des données secrètes X" masquées par le masque multiplicatif β, soit β x X", T étant une table remplie des données égales à l'aléa r de même nombre de bits que X, m étant le masque additif, la succession d'étapes a) à d) suivante :

- a) on remplace T[m] par r XOR 1, pour que la table T contienne partout r sauf à l'indice m, où elle contient r XOR 1 ;
- b) on détermine X' = X XOR m, on effectue r XOR X', c'est-à-dire r XOR X XOR m et on effectue r XOR X' XOR m = r XOR X ;
- c) on calcule (β x r) XOR (β x X) en multipliant r XOR X' XOR m par β et
- d) on obtient β x X" en calculant ((β x r) XOR (β x X)) XOR (β x T[X']).

10. Dispositif de sécurisation d'un traitement cryptographique de données secrètes (80) mettant en oeuvre au moins une transformation non linéaire (105) de type multiplicative des données secrètes, comportant :

- au moins un moyen de combinaison des dites données secrètes avec un premier masque additif (m) par une addition « ou exclusif » pour fournir des données combinées (X') avec le premier masque additif,
- un moyen de conversion dudit premier masque additif (m) en un masque multiplicatif (β) pour obtenir des données masquées avec le masque multiplicatif à partir des données combinées (X') avec le premier masque additif,
- au moins un moyen de transformation des données masquées, avec ladite transformation non linéaire (105) de type multiplicative du traitement cryptographique, et

**caractérisé en ce qu'**il comporte en outre un moyen de remplacement mettant en oeuvre, sur les données combinées (X'), des opérations impliquant au moins un aléa r pour remplacer, préalablement à l'étape de transformation non linéaire (105), une dite donnée secrète X par une valeur non nulle, lorsque X=0 et conserver ladite donnée secrète X inchangée lorsque X≠0, et

dans lequel les moyens de remplacement et de conversion sont configurés pour réaliser, en partant des données secrètes X masquées par le masque additif m, soit X XOR m, pour obtenir des données secrètes X" masquées par le masque multiplicatif β, soit β x X", T étant une table remplie des données égales à un aléa r" binaire prenant aléatoirement la valeur « 0 » ou « 1 », la succession d'étapes e) à h) suivante :

- e) on remplace T[m] par r" XOR 1 pour que la table T contienne partout r" sauf à l'indice m, où elle contient r" XOR 1 ;
- f) on détermine X' = X XOR m, on effectue r XOR X', c'est-à-dire r XOR X XOR m et on effectue r XOR X' XOR m = r XOR X ;
- g) on calcule β x (r XOR X' XOR m XOR r") ;
- h) on obtient β x X" en calculant [β x (r XOR X' XOR m XOR r")] XOR β x (T[X'] XOR r).

**Patentansprüche**

1. Verfahren zum Sichern einer kryptographischen Verarbeitung von geheimen Daten (80), bei dem mindestens eine nichtlineare Transformation (105) des multiplikativen Typs der geheimen Daten ausgeführt wird, umfassend:

   - mindestens einen Schritt des Kombinierens (152) der geheimen Daten mit einer ersten additiven Maske (m) durch eine "Exklusiv-ODER"-Addition zur Bereitstellung von mit der ersten additiven Maske kombinierten Daten (X'),
   - einen Schritt des Umwandelns (153-156) der ersten additiven Maske (m) in eine multiplikative Maske ($\beta$), um mit der multiplikativen Maske maskierte Daten aus den mit der ersten additiven Maske kombinierten Daten (X') zu erhalten,
   - mindestens einen Schritt des Transformierens der mit der multiplikativen Maske maskierten Daten mit der nichtlinearen Transformation (105) des multiplikativen Typs der kryptographischen Verarbeitung,

   **dadurch gekennzeichnet, dass** der Schritt des Umwandelns vor dem Schritt des nichtlinearen Transformierens (105) das Anwenden von Operationen auf die kombinierten Daten (X') umfasst, die mindestens einen Zufallswert r beinhalten, um eine geheime Dateneinheit X durch einen Wert ungleich Null zu ersetzen, wenn X = 0, und die geheime Dateneinheit X unverändert zu halten, wenn X $\neq$ 0, und die Operationen des Ersetzens und der Schritt des Umwandelns einer additiven Maske in eine multiplikative Maske, ausgehend von den durch die additive Maske m maskierten geheimen Daten X, entweder X XOR m, um durch die multiplikative Maske $\beta$ maskierte geheime Daten X" zu erhalten, oder $\beta$ x X", die Abfolge der folgenden Schritte a) bis d) umfassen, wobei T eine Tabelle ist, die mit Daten gefüllt ist, die dem Zufallswert r der gleichen Bitzahl wie X entsprechen, und m die additive Maske ist:

   - a) Ersetzen von T[m] durch r XOR 1, sodass die Tabelle T überall r enthält, außer beim Index m, wo sie r XOR 1 enthält;
   - b) Bestimmen von X' = X XOR m, Ausführen von r XOR X', d. h. r XOR X XOR m und Ausführen von r XOR X' XOR m = r XOR X;
   - c) Berechnen von ($\beta$ x r) XOR ($\beta$ x X) durch Multiplikation von r XOR X' XOR m mit $\beta$ und
   - d) Erhalten von $\beta$ x X" durch Berechnung (($\beta$ x r) XOR ($\beta$ x X)) XOR ($\beta$ x T[X']).

2. Verfahren zum Sichern einer kryptographischen Verarbeitung von geheimen Daten (80), bei dem mindestens eine nichtlineare Transformation (105) des multiplikativen Typs der geheimen Daten ausgeführt wird, umfassend:

   - mindestens einen Schritt des Kombinierens (152) der geheimen Daten mit einer ersten additiven Maske (m) durch eine "Exklusiv-ODER"-Addition zur Bereitstellung von mit der ersten additiven Maske kombinierten Daten (X'),
   - einen Schritt des Umwandelns (153-156) der ersten additiven Maske (m) in eine multiplikative Maske ($\beta$), um mit der multiplikativen Maske maskierte Daten aus den mit der ersten additiven Maske kombinierten Daten (X') zu erhalten,
   - mindestens einen Schritt des Transformierens der mit der multiplikativen Maske maskierten Daten mit der nichtlinearen Transformation (105) des multiplikativen Typs der kryptographischen Verarbeitung,

   **dadurch gekennzeichnet, dass** der Schritt des Umwandelns vor dem Schritt des nichtlinearen Transformierens (105) das Anwenden von Operationen an den kombinierten Daten (X') umfasst, die mindestens einen Zufallswert r beinhalten, um eine geheime Dateneinheit X durch einen Wert ungleich Null zu ersetzen, wenn X = 0, und die geheime Dateneinheit X unverändert zu halten, wenn X $\neq$ 0, und die Operationen des Ersetzens und der Schritt des Umwandelns einer additiven Maske in eine multiplikative Maske, ausgehend von den durch die additive Maske m maskierten geheimen Daten X, entweder X XOR m, um durch die multiplikative Maske $\beta$ maskierte geheime Daten X" zu erhalten, oder $\beta$ x X", die Abfolge der folgenden Schritte e) bis h) umfassen, wobei T eine Tabelle ist, die mit Daten gefüllt ist, die einem binären Zufallswert r" entsprechen, der zufällig den Wert "0" oder "1" annimmt:

   - e) Ersetzen von T[m] durch r" XOR 1, sodass die Tabelle T überall r" enthält, außer beim Index m, wo sie r" XOR 1 enthält;
   - f) Bestimmen von X' = X XOR m, Ausführen von r XOR X', d. h. r XOR X XOR m und Ausführen von r XOR X' XOR m = r XOR X;
   - g) Berechnen von $\beta$ x (r XOR X' XOR m XOR r");

- h) Erhalten von β x X" durch Berechnung von [β x (r XOR X' XOR m XOR r")] XOR β x (T[X'] XOR r).

3. Verfahren nach Anspruch 1 oder 2, wobei der Zufallswert r bei jeder neuen Ausführung der kryptographischen Verarbeitung regeneriert wird.

4. Verfahren nach einem der vorhergehenden Ansprüche, wobei nach den Operationen des Ersetzens die ursprüngliche Tabelle wiederhergestellt wird (157), indem eine inverse Modifikation auf den modifizierten indizierten Eintrag (T[m]) angewendet wird.

5. Verfahren nach einem der vorhergehenden Ansprüche, wobei die Tatsache, dass die "Exklusiv-ODER"-Addition (156) eines Eintrags der Tabelle mit den mit einer additiven Maske kombinierten Daten durchgeführt wurde, gespeichert wird, und das Verfahren nach der nichtlinearen Transformation (105) einen Schritt einer "Exklusiv-ODER"-Addition (160) desselben Eintrags der Tabelle mit den durch die nichtlineare Transformation erhaltenen Daten umfasst.

6. Verfahren nach einem der vorhergehenden Ansprüche, wobei es sich bei mindestens einem Schritt der nichtlinearen Transformation des multiplikativen Typs um die MIT-Transformation der AES-Codierung handelt, und die additive Maske zwischen zwei Runden in eine multiplikative Maske umgewandelt wird.

7. Verfahren nach Anspruch 6, das ferner einen Schritt der umgekehrten Umwandlung der multiplikativen Maske in eine additive Maske nach dem Schritt der nichtlinearen Umwandlung multiplikativer Natur umfasst.

8. Verfahren nach dem vorhergehenden Anspruch, wobei während des Schritts der umgekehrten Umwandlung, ausgehend von den durch die multiplikative Maske β' = MIT(β) maskierten geheimen Daten X", entweder β' x X", um durch die additive Maske m maskierte geheime Daten $X_1$ zu erhalten, oder $X_1$ XOR m, die folgenden Schritte i) bis k) durchgeführt werden, wobei, wenn T eine Tabelle ist, die mit Daten gefüllt ist, die einem Zufallswert r entsprechen, und m die additive Maske ist, T[m] durch r XOR 1 ersetzt wird, sodass die Tabelle T überall r enthält, außer beim Index m, wo sie r XOR 1 enthält, sodass für β' X" gilt β' X" = β' $X_1$, wenn X von "0" verschieden ist, und β' X" = β' wenn X = 0,

  - i) Berechnen von β'[r XOR T(X XOR m) XOR m] und
  - j) Berechnen von β' x X" XOR β' [r XOR T(X XOR m) XOR m],
  - k) Erhalten von $X_1$ XOR m durch Berechnen von $β'^{-1}$ x [β' x X" XOR r x β' XOR β' (T[X XOR m] XOR m)].

9. Vorrichtung zum Sichern einer kryptographischen Verarbeitung von geheimen Daten (80), bei der mindestens eine nichtlineare Transformation (105) des multiplikativen Typs der geheimen Daten ausgeführt wird, umfassend:

  - mindestens ein Mittel zum Kombinieren der geheimen Daten mit einer ersten additiven Maske (m) durch eine "Exklusiv-ODER"-Addition zur Bereitstellung von mit der ersten additiven Maske kombinierten Daten (X'),
  - ein Mittel zum Umwandeln der ersten additiven Maske (m) in eine multiplikative Maske (β), um mit der multiplikativen Maske maskierte Daten aus den mit der ersten additiven Maske kombinierten Daten (X') zu erhalten,
  - mindestens ein Mittel zum Transformieren der maskierten Daten mit der nichtlinearen Transformation (105) des multiplikativen Typs der kryptographischen Verarbeitung, und

  **dadurch gekennzeichnet, dass** sie ferner ein Mittel zum Ersetzen umfasst, das an den kombinierten Daten (X') Operationen ausführt, die mindestens einen Zufallswert r beinhalten, um vor dem Schritt des nichtlinearen Transformierens (105) eine geheime Dateneinheit X durch einen Wert ungleich Null zu ersetzen, wenn X = 0, und die geheime Dateneinheit X unverändert zu halten, wenn X ≠ 0, und wobei die Mittel zum Ersetzen und zum Umwandeln dazu ausgelegt sind, ausgehend von den durch die additive Maske m maskierten geheimen Daten X, entweder X XOR m, um durch die multiplikative Maske β maskierte geheime Daten X" zu erhalten, oder β x X", die Abfolge der folgenden Schritte a) bis d) umzusetzen, wobei T eine Tabelle ist, die mit Daten gefüllt ist, die dem Zufallswert r der gleichen Bitzahl wie X entsprechen, und m die additive Maske ist:

  - a) Ersetzen von T[m] durch r XOR 1, sodass die Tabelle T überall r enthält, außer beim Index m, wo sie r XOR 1 enthält;
  - b) Bestimmen von X' = X XOR m, Ausführen von r XOR X', d. h. r XOR X XOR m und Ausführen von r XOR X' XOR m = r XOR X;
  - c) Berechnen von (β x r) XOR (β x X) durch Multiplikation von r XOR X' XOR m mit β und

- d) Erhalten von β x X" durch Berechnung ((β x r) XOR (β x X)) XOR (β x T[X']).

**10.** Vorrichtung zum Sichern einer kryptographischen Verarbeitung von geheimen Daten (80), bei der mindestens eine nichtlineare Transformation (105) des multiplikativen Typs der geheimen Daten ausgeführt wird, umfassend:

- mindestens ein Mittel zum Kombinieren der geheimen Daten mit einer ersten additiven Maske (m) durch eine "Exklusiv-ODER"-Addition zur Bereitstellung von mit der ersten additiven Maske kombinierten Daten (X'),
- ein Mittel zum Umwandeln der ersten additiven Maske (m) in eine multiplikative Maske (β), um mit der multiplikativen Maske maskierte Daten aus den mit der ersten additiven Maske kombinierten Daten (X') zu erhalten,
- mindestens ein Mittel zum Transformieren der maskierten Daten mit der nichtlinearen Transformation (105) des multiplikativen Typs der kryptographischen Verarbeitung, und

**dadurch gekennzeichnet, dass** sie ferner ein Mittel zum Ersetzen umfasst, das an den kombinierten Daten (X') Operationen ausführt, die mindestens einen Zufallswert r beinhalten, um vor dem Schritt des nichtlinearen Transformierens (105) eine geheime Dateneinheit X durch einen Wert ungleich Null zu ersetzen, wenn X = 0, und die geheime Dateneinheit X unverändert zu halten, wenn X ≠ 0, und

wobei die Mittel zum Ersetzen und zum Umwandeln dazu ausgelegt sind, ausgehend von den durch die additive Maske m maskierten geheimen Daten X, entweder X XOR m, um durch die multiplikative Maske β maskierte geheime Daten X" zu erhalten, oder β x X", die Abfolge der folgenden Schritte e) bis h) umzusetzen, wobei T eine Tabelle ist, die mit Daten gefüllt ist, die einem binären Zufallswert r" entsprechen, der zufällig den Wert "0" oder "1" annimmt:

- e) Ersetzen von T[m] durch r" XOR 1, sodass die Tabelle T überall r" enthält, außer beim Index m, wo sie r" XOR 1 enthält;
- f) Bestimmen von X' = X XOR m, Ausführen von r XOR X', d. h. r XOR X XOR m und Ausführen von r XOR X' XOR m = r XOR X;
- g) Berechnen von β x (r XOR X' XOR m XOR r");
- h) Erhalten von β x X" durch Berechnung von [β x (r XOR X' XOR m XOR r")] XOR β x (T[X'] XOR r).

## Claims

**1.** Method for securing a secret data cryptographic treatment (80) implementing at least one multiplicative non-linear transformation (105) of the secret data, including:

- at least one step (152) of combining said secret data with a first additive mask (m) by an "exclusive or" addition in order to provide data (X') combined with the first additive mask,
- a step (153-156) of converting said first additive mask (m) into a multiplicative mask (β) in order to obtain data masked with the multiplicative mask from the data (X') combined with the first additive mask,
- at least one step of transforming the data masked with the multiplicative mask, with said multiplicative non-linear transformation (105) of the cryptographic treatment,

**characterized in that** the conversion step prior to the non-linear transformation step (105) comprises the application, to the combined data (X'), of operations involving at least one random r in order to replace one said secret item of data X with a nonzero value, when X=0, and keep said secret item of data X unchanged when X≠0, and

the replacement operations and the step of converting the additive mask into a multiplicative mask include, starting from the secret data X masked by the additive mask m, that is to say X XOR m, in order to obtain secret data X" masked by the multiplicative mask β, that is to say β x X", T being a table filled with data equal to the random r having the same number of bits as X, m being the additive mask, the following sequence of steps a) to d):

- a) T[m] is replaced with r XOR 1, so that the table T contains r everywhere except for at the index m, where it contains r XOR 1;
- b) X' = X XOR m is determined, r XOR X', that is to say r XOR X XOR m, is performed, and r XOR X' XOR m = r XOR X is performed;
- c) (β x r) XOR (β x X) is calculated by multiplying r XOR X' XOR m by β, and
- d) β x X" is obtained by calculating ((β x r) XOR (β x X)) XOR (β x T[X']).

**2.** Method for securing a secret data cryptographic treatment (80) implementing at least one multiplicative non-linear transformation (105) of the secret data, including:

- at least one step (152) of combining said secret data with a first additive mask (m) by an "exclusive or" addition in order to provide data (X') combined with the first additive mask,
- a step (153-156) of converting said first additive mask (m) into a multiplicative mask ($\beta$) in order to obtain data masked with the multiplicative mask from the data (X') combined with the first additive mask,
- at least one step of transforming the data masked with the multiplicative mask, with said multiplicative non-linear transformation (105) of the cryptographic treatment,

**characterized in that** the conversion step prior to the non-linear transformation step (105) comprises the application, to the combined data (X'), of operations involving at least one random r in order to replace one said secret item of data X with a nonzero value, when X=0, and keep said secret item of data X unchanged when X≠0, and the replacement operations and the step of converting the additive mask into a multiplicative mask include, starting from the secret data X masked by the additive mask m, that is to say X XOR m, in order to obtain secret data X" masked by the multiplicative mask $\beta$, that is to say $\beta$ x X", T being a table filled with data equal to a binary random r" randomly taking the value "0" or "1", the following sequence of steps e) to h) :

- e) T[m] is replaced with r" XOR 1, so that the table T contains r" everywhere except for at the index m, where it contains r" XOR 1;
- f) X' = X XOR m is determined, r XOR X', that is to say r XOR X XOR m, is performed, and r XOR X' XOR m = r XOR X is performed;
- g) $\beta$ x (r XOR X' XOR m XOR r") is calculated;
- h) $\beta$ x X" is obtained by calculating [$\beta$ x (r XOR X' XOR m XOR r")] XOR $\beta$ x (T[X'] XOR r).

3. Method according to Claim 1 or 2, wherein the random r is regenerated upon each new execution of the cryptographic treatment.

4. Method according to one of the preceding claims, wherein, following the replacement operations, the initial table is restored (157) by applying an inverse modification to said modified indexed entry (T[m]).

5. Method according to one of the preceding claims, wherein there is storage of having performed the "exclusive or" addition (156) for an entry in the table with the data combined with an additive mask, and the method comprises, following said non-linear transformation (105), an "exclusive or" addition step (160) for the same entry in the table with the data obtained by the non-linear transformation.

6. Method according to one of the preceding claims, wherein at least one said multiplicative non-linear transformation step is the MIT transformation of the AES coding, and the additive mask is converted into a multiplicative mask between two rounds.

7. Method according to Claim 6, furthermore including a step of inverse conversion of the multiplicative mask into an additive mask after said multiplicative non-linear transformation step.

8. Method according to the preceding claim, wherein, during the inverse conversion step, starting from the secret data X" masked by the multiplicative mask $\beta$' = MIT($\beta$), that is to say $\beta$' x X", in order to obtain secret data $X_1$ masked by the additive mask m, that is to say $X_1$ XOR m, the following steps i) to k) are performed, T being a table filled with data equal to a random r, m being the additive mask, T[m] is replaced with r XOR 1 so that the table T contains r everywhere except for at the index m, where it contains r XOR 1, giving $\beta$' X" where $\beta$' X" = $\beta'X_1$, if X is other than "0" and $\beta$' X" = $\beta$' if X = 0,

- i) $\beta$'[r XOR T(X XOR m) XOR m] is calculated and
- j) $\beta$' x X" XOR $\beta$' [r XOR T(X XOR m) XOR m] is calculated,
- k) $X_1$ XOR m is obtained by calculating $\beta'^{-1}$ x [$\beta$' x X" XOR r x $\beta$' XOR $\beta$' (T[X XOR m] XOR m)].

9. Device for securing a secret data cryptographic treatment (80) implementing at least one multiplicative non-linear transformation (105) of the secret data, including:

- at least one means for combining said secret data with a first additive mask (m) by an "exclusive or" addition in order to provide data (X') combined with the first additive mask,
- a means for converting said first additive mask (m) into a multiplicative mask ($\beta$) in order to obtain data masked with the multiplicative mask from the data (X') combined with the first additive mask,

- at least one means for transforming the masked data, with said multiplicative non-linear transformation (105) of the cryptographic treatment, and

**characterized in that** it furthermore includes a replacement means implementing, on the combined data (X'), operations involving at least one random r in order, prior to the non-linear transformation step (105), to replace one said secret item of data X with a nonzero value, when X=0, and keep said secret item of data X unchanged when X≠0, and
wherein the replacement and conversion means are configured to perform, starting from the secret data X masked by the additive mask m, that is to say X XOR m, in order to obtain secret data X" masked by the multiplicative mask β, that is to say β x X", T being a table filled with data equal to the random r having the same number of bits as X, m being the additive mask, the following sequence of steps a) to d):

- a) T[m] is replaced with r XOR 1, so that the table T contains r everywhere except for at the index m, where it contains r XOR 1;
- b) X' = X XOR m is determined, r XOR X', that is to say r XOR X XOR m, is performed, and r XOR X' XOR m = r XOR X is performed;
- c) (β x r) XOR (β x X) is calculated by multiplying r XOR X' XOR m by β, and
- d) β x X" is obtained by calculating ((β x r) XOR (β x X)) XOR (β x T[X']).

10. Device for securing a secret data cryptographic treatment (80) implementing at least one multiplicative non-linear transformation (105) of the secret data, including:

- at least one means for combining said secret data with a first additive mask (m) by an "exclusive or" addition in order to provide data (X') combined with the first additive mask,
- a means for converting said first additive mask (m) into a multiplicative mask (β) in order to obtain data masked with the multiplicative mask from the data (X') combined with the first additive mask,
- at least one means for transforming the masked data, with said multiplicative non-linear transformation (105) of the cryptographic treatment, and

**characterized in that** it furthermore includes a replacement means implementing, on the combined data (X'), operations involving at least one random r in order, prior to the non-linear transformation step (105), to replace one said secret item of data X with a nonzero value, when X=0, and keep said secret item of data X unchanged when X≠0, and
wherein the replacement and conversion means are configured to perform, starting from the secret data X masked by the additive mask m, that is to say X XOR m, in order to obtain secret data X" masked by the multiplicative mask β, that is to say β x X", T being a table filled with data equal to a binary random r" randomly taking the value "0" or "1", the following sequence of steps e) to h):

- e) T[m] is replaced with r" XOR 1, so that the table T contains r" everywhere except for at the index m, where it contains r" XOR 1;
- f) X' = X XOR m is determined, r XOR X', that is to say r XOR X XOR m, is performed, and r XOR X' XOR m = r XOR X is performed;
- g) β x (r XOR X' XOR m XOR r") is calculated;
- h) β x X'' is obtained by calculating [β x (r XOR X' XOR m XOR r")] XOR β x (T[X'] XOR r).

Figure 1

Figure 2

Message X

Message crypté Y

Figure 3

$$T[m] = r \text{ XOR } 1 \qquad \text{— } 151$$

$$X' = X \text{ XOR } m \qquad \text{— } 152$$

$$\text{Calcul de } r \text{ XOR } X' \qquad \text{— } 153$$

$$\text{Calcul de } r \text{ XOR } X \qquad \text{— } 154$$

$$\text{Calcul de res} = \beta \times r \text{ XOR } \beta \times X \qquad \text{— } 155$$

$$\text{Remplacement de res par res XOR } \beta \times T[X'] \qquad \text{— } 156$$

$$157 \text{ — } \qquad T[m] = r \text{ XOR } 1$$

$$\text{MIT(res)} \qquad \text{— } 105$$

$$T[m] = r \text{ XOR } 1 \qquad \text{— } 158$$

$$\text{Calcul de res} = \beta' \times (r \text{ XOR } T[X'] \text{ XOR } m) \qquad \text{— } 159$$

$$\begin{aligned}\text{Calcul de res} &= Z \text{ XOR res} \\ &= \beta' \times (X'' \text{ XOR } r \text{ XOR } T[X \text{ XOR } m] \text{ XOR } m)\end{aligned} \qquad \text{— } 160$$

$$\begin{aligned}\text{Calcul de res} &= \beta'^{-1} \times \text{res} \\ &= \beta'^{-1} \times [\beta' \times (X'' \text{ XOR } r \text{ XOR } T[X \text{ XOR } m] \text{ XOR } m)] \\ &= X_1 \text{ XOR } m\end{aligned} \qquad \text{— } 161$$

$$162 \text{ — } \qquad T[m] = r \text{ XOR } 1$$

$$\text{AT} \qquad \text{— } 106$$

Figure 4

T[m] = r' XOR 1 —— 251

↓

X' = X XOR m —— 252

↓

Calcul de r XOR X' —— 253

↓

Calcul de r XOR X —— 254

↓

Calcul de res = β x (r XOR X' XOR m XOR r') —— 255

↓

Remplacement de res par res XOR β x T[X'] XOR r —— 256

↓

257 —— T[m] = T[m] XOR 1

↓

MIT(res) —— 105

↓

Figure 5

**EP 2 296 307 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008260145 A

**Littérature non-brevet citée dans la description**

- Towards Sound Approaches to Counteract Power-Analysis Attacks. **SURESH CHARI ; CHARANTJIT S. JUTLA ; JOSYULA R. RAO ; PANKAJ ROHATGI.** Proceedings of Advances in Cryptology-CRYPTO'99. Springer-Verlag, 1999, 398-412

- **J.D. GOLIC ; C. TYMEN.** *Multiplicative Masking and Power Analysis of AES*